# EUROPÄISCHE PATENTANMELDUNG

(11) **EP 0 694 718 A1**
(43) Veröffentlichungstag der Anmeldung: **31.01.1996**
(21) Anmeldenummer: 95108296.5
(22) Anmeldetag: 31.05.1995
(51) Int. Cl.: F16J 15/08

(54) **Zylinderkopfdichtung**

(30) Priorität: 27.07.1994 DE 4426508
(71) Anmelder: GOETZE Payen GmbH, D-57562 Herdorf (DE)
(72) Erfinder: Papendorf, Jörg, Dipl.-Ing., D-51519 Odenthal-Glöbusch (DE); Wagner, Franz-Josef, D-51379 Leverkusen (DE)

(57) **Zusammenfassung**

Bei einer metallischen Zylinderkopfdichtung (1) ist im Bereich der Brennraumöffnung (10) eine Ringeinlage (7) vorgesehen, welche aus einem umgebördelten Blech gebildet ist. Die Ringeinlage (7) liegt mit ihren Schenkeln (11, 11') an der Stirnseite (8) der Distanzplatte (4) an.

## Beschreibung

Die Erfindung betrifft eine metallische Zylinderkopfdichtung für Brennkraftmaschinen, bestehend aus zwei Deckblechen mit mindestens je einer eine Brennraumöffnung umgebenden Sicke und einer zwischen den Deckblechen angeordneten Distanzplatte, wobei die Sicken in einer Vertikalebene angeordnet sind und mit ihren konvexen Aufwölbungen auf der Distanzplatte liegen wobei sich zwischen den Deckblechen ein gebördelter Bereich erstreckt der als Pressungsbegrenzer der Sicken fungiert.

Die EP 0 306 766 offenbart eine gattungsgemäße Zylinderkopfdichtung. Zwischen zwei Deckblechen erstreckt sich eine Distanzplatte die an den Brennraumöffnungen umgefalzt oder gebördelt ist. Über diese Dickenerhöhung wird eine hohe Pressung am Brennraum ermöglicht, ohne daß die Sicken plattgedrückt werden können.

Je nach Aufbau der Zylinderkopfdichtung kann die geforderte Einbaudicke, welche über die Distanzplatte einstellbar ist, relativ groß sein. In diesem Fall ergibt sich das Problem, daß der umgefalzte Endbereich der Distanzplatte eine sehr große axiale Höhe der Zylinderkopfdichtung mit sich bringt.

Um dieses Problem zu beseitigen, wurden bereits separate Ringeinlagen verwendet.

Die DE 4219709 A1 offenbart eine derartige Konstruktion. Die Ringeinlagen werden umgebördelt und liegen mit ihrem Endbereich auf der Distanzplatte auf. Aufgrund der Dicke der Distanzplatte weisen die Ringeinlagen nur eine relativ kleine Materialdicke auf.

Derartige Ringeinlagen sind so dünn, daß es sich um Folien handelt. Die Handhabung solcher Folien ist in der automatischen Fertigung äußerst problematisch.

Der Erfindung liegt die Aufgabe zugrunde, eine gattungsgemäße Zylinderkopfdichtung im Hinblick auf den Herstellungsprozeß zu verbessern, wobei gleichzeitig die Anpassungs- und Rückfederungsfähigkeit der Zylinderkopfdichtung im Bereich des Bördels verbessert wird.

Diese Aufgabe wird erfindungsgemäß dadurch gelöst, daß der gebördelte Bereich durch eine separate Ringeinlage gebildet ist, deren Schenkel unmittelbar aufeinanderliegen, wobei die Endbereiche der Schenkel an der Stirnfläche der Distanzplatte grenzen. Auf diese Weise kann eine Ringeinlage mit relativ großer Materialdicke eingesetzt werden.

Zur Ausübung der Pressungsbegrenzung reicht es aus, daß die Ringeinlage nur eine geringfügig größere Materialdicke als die halbe Materialdicke der Distanzplatte aufweist. Damit ist die Ringeinlage gegenüber den bisherigen Folien besser handhabbar, wobei aber gleichzeitig die Gesamthöhe der Zylinderkopfdichtung sich nicht verändert.

Überdies erzeugt die Ringeinlage auf die Deckbleche eine größere Rückfederungskraft als Ringeinlagen mit nur geringer Materialdicke. Hierdurch entsteht eine bessere Anpassungsfähigkeit der Zylinderkopfdichtung an die abzudichtenden Bauteile, wenn diese aufgrund schwankenden Innendrucks oder Temperaturschwankungen oszillieren und damit den Dichtspalt vergrößern und verkleinern.

Die Erfindung ist in der Zeichnung anhand eines Ausführungsbeispieles dargestellt und wird im folgenden näher erläutert.

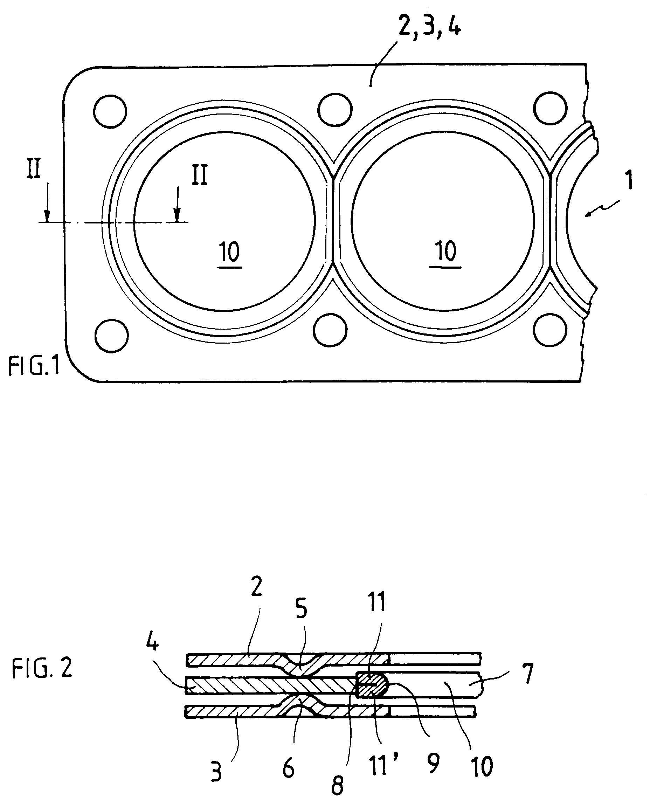

Es zeigen:
- Figur 1: Draufsicht auf eine erfindungsgemäße Zylinderkopfdichtung
- Figur 2: Schnitt gemäß Linie II-II der Figur 1
Die in der Figur 1 dargestellte metallische Zylinderkopfdichtung 1 besteht im wesentlichen aus zwei als Deckbleche (2, 3) ausgebildete Federstahlbleche und einer Distanzplatte (4) (Fig. 2). Die Deckbleche (2, 3) weisen je eine Sicke (5, 6) auf, die in einer gemeinsamen Vertikalabene liegen. Die Sicken 5,6 stützen sich auf der Distanzplatte (4) ab. Damit die Sicken (5, 6) nicht plattgedrückt werden können, ist eine Ringeinlage 7 an der Stirnseite (8) der Distanzplatte (4) vorgesehen. Die Ringeinlage (7) besteht aus einem umformfähigen Material und ist durch umbördeln erzeugt.Der umgebogene Bereich (9) der Ringeinlage (7) ist der Brennraumöffnung 10 zugekehrt. Die Schenkel (11, 11') liegen unmittelbar aufeinander. Aufgrund ihrer Konstruktion ist die Ringeinlage (7) in der Lage während des Betriebes der Brennkraftmaschine eine Rückstellkraft auf die Deckbleche (2, 3) zu erzeugen.

## Patentansprüche

1. Metallische Zylinderkopfdichtung für Brennkraftmaschinen, bestehend aus zwei Deckblechen mit mindestens je einer eine Brennraumöffnung umgebenden Sicke und einer zwischen den Deckblechen angeordneten Distanzplatte, wobei die Sicken in einer Vertikalebene angeordnet sind und mit ihren konvexen Aufwölbungen auf der Distanzplatte liegen, wobei sich zwischen den Deckblechen ein gebördelter Bereich erstreckt, der als Pressungsbegrenzer der Sicken fungiert, dadurch gekennzeichnet, daß der gebördelte Bereich durch eine separate Ringeinlage (7) gebildet ist, deren Schenkel (11, 11') unmittelbar aufeinanderliegen, wobei die Endbereiche der Schenkel (11, 11') an der Stirnfläche (8) der Distanzplatte (4) grenzen.

2. Metallische Zylinderkopfdichtung nach Anspruch 1, dadurch gekennzeichnet, daß der umgebogene Bördelabschnitt (9) der Brennraumöffnung (10) zugekehrt ist und diese unmittelbar begrenzt.
